# EUROPEAN PATENT APPLICATION

(11) **EP 4 817 956 A1**
(43) Date of publication of application: **07.10.2026**
(21) Application number: 24897588.0
(22) Date of filing: 27.11.2024
(51) Int. Cl.: B60R 1/12, B60R 1/04, B60R 1/26, B60R 11/04, G02F 1/13, G02F 1/133, G02F 1/1333, G02F 1/1335, G02F 1/1347, G09F 9/00

(54) **INNER MIRROR**

(30) Priority: 28.11.2023 JP 2023200818
(71) Applicant: Murakami Corporation, Shizuoka 420-8550 (JP)
(72) Inventor: KURIYAMA, Anna, Shizuoka-shi, Shizuoka 420-8550 (JP); SUGIYAMA, Ayako, Shizuoka-shi, Shizuoka 420-8550 (JP); SUZUKI, Tsubasa, Shizuoka-shi, Shizuoka 420-8550 (JP)
(74) Representative: Müller-Boré & Partner Patentanwälte PartG mbB
(86) International application number: PCT/JP2024/041978
(87) International publication number: WO 2025/115904

(57) **Abstract**

An inner mirror 100 according to the present invention comprises a liquid crystal optical element 102, a liquid crystal display device 103, and an imaging unit 104. The imaging unit 104 is disposed on the back side of the liquid crystal optical element 102 and is capable of capturing at least a visible light image among a visible light image and an infrared image by receiving light incident through the liquid crystal optical element 102. The liquid crystal optical element 102 has, in the viewing direction X of the inner mirror 100, a camera region 1021 corresponding to the imaging unit 104 and a main region 1022 other than the camera region 1021, and the camera region and the main region are configured such that switching between a reflective state and a transmissive state can be independently controlled. The liquid crystal display device 103 is disposed on the back side of the main region of the liquid crystal optical element 102 and has an outer shape corresponding to the main region of the liquid crystal optical element 102 in the viewing direction X.

## Description

### TECHNICAL FIELD

The present invention relates to an inner mirror for a vehicle.

### BACKGROUND ART

As an inner mirror for a vehicle, an anti-glare mirror having a function (anti-glare function) for preventing a driver or the like from being dazzled by light such as headlights of a following vehicle reflected during nighttime driving or the like is known. As the anti-glare mirror, for example, an EC (Electrochromic) anti-glare mirror is known.

The EC anti-glare mirror generally includes an EC element provided on the front side of a mirror reflective surface, and achieves the above-described anti-glare function by controlling the reflectance through transitioning the operating state of the EC element (by changing the amount of coloration). More specifically, the EC anti-glare mirror, as the anti-glare function, when the surroundings of the vehicle are dark such as at night, controls the reflectance according to the intensity of light from the rear of the vehicle (rearward light), such that when the intensity of rearward light is large, the amount of coloration of the EC element is increased to lower the reflectance, and when the intensity of rearward light is small, the amount of coloration of the EC element is decreased to increase the reflectance.

In addition, a camera used in a DMS (Driver Monitoring System) or an OMS (Occupant Monitoring System) may also be mounted in the inner mirror of the vehicle.

For example, Patent Document 1 discloses an inner mirror (rearview mirror assembly) including an IR (Infrared) light source that transmits radiation through an EC element (electro-optic element), and an IR camera (image sensor) that captures image data of an object via the EC element.

In Patent Document 1, the inner mirror monitors ambient light communicated from an ambient light sensor and glare light from a following vehicle communicated from a glare sensor. Then, the inner mirror controls an operating state (operating condition) of the EC element in accordance with the ambient light and the glare light, controls an intensity of radiation output from the IR light source through the EC element in cooperation with the operating state of the EC element, and identifies an occupant of the vehicle based on image data captured by the IR camera.

### PRIOR ART REFERENCES

### PATENT DOCUMENTS

Patent Document 1: Japanese Patent No. 6811314

### SUMMARY OF THE INVENTION

### PROBLEMS TO BE SOLVED BY THE INVENTION

In the inner mirror of Patent Document 1, the transmittance in an infrared region in the EC element is low, and the transmittance in the infrared region fluctuates with control of the operating state of the EC element. Therefore, in capturing images by the built-in IR camera, it is necessary to control (adjust) the output intensity (light intensity, etc.) of the IR light source, the gain of the IR camera, and the like in accordance with the operating state of the EC element. Therefore, there are problems such that complicated control is required and power consumption increases.

Furthermore, when considering incorporating an IR camera in an inner mirror having a liquid crystal display built therein for displaying an image of the rear of the vehicle or the like (an inner mirror with an image display function; an electronic inner mirror), it is conceivable that the IR camera is arranged at a position, on the back side of the mirror element, avoiding the liquid crystal display. However, in this case, there is a problem in that the size of a housing or the like of the inner mirror becomes large.

Further, when considering incorporating a color camera in the inner mirror, it is conceivable that, in capturing images by the built-in color camera, a configuration is adopted in which a part of the mirror element is omitted (a part of the mirror reflective surface is removed) in order to secure transmittance in the visible light region. However, in this case, since the built-in color camera is constantly visible to the driver or an occupant, there is a problem in that the design quality is inferior.

Furthermore, when considering incorporating a color camera in the EC anti-glare mirror, even if a configuration in which a part of the mirror reflective surface is removed is adopted, it is difficult to partially remove the EC cell of the EC element. Therefore, there is a problem in that the transmittance in the visible light region fluctuates in accordance with the operating state of the EC element.

Accordingly, an object of the present invention is to provide an inner mirror suitable for achieving favorable image capturing by a built-in camera.

### MEANS FOR SOLVING THE PROBLEMS

According to the present invention, an inner mirror according to a first embodiment comprises: a liquid crystal optical element switchable between a reflective state and a transmissive state; and an imaging unit disposed on the back side of the liquid crystal optical element and configured to receive light incident through the liquid crystal optical element and capture at least one of a visible light image and an infrared image.

In an inner mirror according to a second embodiment based on the first embodiment, the imaging unit is a camera capable of capturing at least a visible light image among a visible light image and an infrared image, and the liquid crystal optical element has a camera region corresponding to the imaging unit in the viewing direction of the inner mirror and a main region other than the camera region, the camera region and the main region being configured such that switching between the reflective state and the transmissive state is independently controllable.

In an inner mirror according to a third embodiment based on the second embodiment, the inner mirror further comprises a liquid crystal display device disposed on the back side of the main region of the liquid crystal optical element and having an outer shape corresponding to the main region of the liquid crystal optical element in the viewing direction.

In an inner mirror according to a fourth embodiment based on the third embodiment, the imaging unit is a visible light/infrared camera capable of capturing a visible light image and an infrared image, the inner mirror further comprises a light-emitting unit disposed on the back side of the main region of the liquid crystal optical element and configured to emit infrared light, and the liquid crystal display device has an outer shape corresponding to a region of the main region of the liquid crystal optical element excluding a portion corresponding to the light-emitting unit in the viewing direction.

In an inner mirror according to a fifth embodiment based on the fourth embodiment, the inner mirror further comprises a black mask member disposed between the main region of the liquid crystal optical element and the light-emitting unit, the black mask member having an outer shape overlapping the light-emitting unit and not overlapping the camera region of the liquid crystal optical element and the liquid crystal display device in the viewing direction.

In an inner mirror according to a sixth embodiment based on the fifth embodiment, the black mask member is formed of a visible-light-blocking and infrared-transmitting material.

In an inner mirror according to a seventh embodiment based on the third embodiment, the imaging unit is a visible light/infrared camera capable of capturing a visible light image and an infrared image, the liquid crystal display device has a backlight, and at least some light sources of the backlight are light sources capable of emitting infrared light.

In an inner mirror according to an eighth embodiment based on the second embodiment, the inner mirror further comprises a liquid crystal display device disposed on the back side of the liquid crystal optical element, the liquid crystal display device having a second camera region corresponding to the camera region of the liquid crystal optical element in the viewing direction and a second main region other than the second camera region, a visible light transmittance of the second camera region being higher than a visible light transmittance of the second main region, and the imaging unit receiving light incident through the camera region of the liquid crystal optical element and the second camera region of the liquid crystal display device.

In an inner mirror according to a ninth embodiment based on the eighth embodiment, the liquid crystal display device is configured such that a front polarizer, a color filter, a rear polarizer, and a backlight are not present in the second camera region.

In an inner mirror according to a tenth embodiment based on the eighth embodiment, the liquid crystal display device is configured such that only a glass substrate is present in the second camera region.

In an inner mirror according to an eleventh embodiment based on the eighth embodiment, the liquid crystal display device is configured such that the second camera region is hollow.

In an inner mirror according to a twelfth embodiment based on the eighth embodiment, the imaging unit is a visible light/infrared camera capable of capturing a visible light image and an infrared image.

In an inner mirror according to a thirteenth embodiment based on the second embodiment, the imaging unit is a visible light/infrared camera capable of capturing a visible light image and an infrared image, and the inner mirror further comprises a light-emitting unit disposed on the back side of the main region of the liquid crystal optical element and configured to emit infrared light, and a black mask member disposed between the main region of the liquid crystal optical element and the light-emitting unit and having an outer shape overlapping the light-emitting unit and not overlapping the camera region of the liquid crystal optical element in the viewing direction.

In an inner mirror according to a fourteenth embodiment based on the thirteenth embodiment, the black mask member has a first region corresponding to the light-emitting unit in the viewing direction and a second region other than the first region, and an infrared transmittance of the first region is higher than an infrared transmittance of the second region.

In an inner mirror according to a fifteenth embodiment based on the fourteenth embodiment, the first region of the black mask member is formed of a visible-light-blocking and infrared-transmitting material.

In an inner mirror according to a sixteenth embodiment based on the first embodiment, the imaging unit is an infrared camera capable of capturing an infrared image, and the inner mirror further comprises a liquid crystal display device disposed on the back side of the liquid crystal optical element and having an outer shape corresponding to a region of the liquid crystal optical element excluding a region corresponding to the imaging unit in the viewing direction of the inner mirror.

In an inner mirror according to a seventeenth embodiment based on the sixteenth embodiment, the inner mirror further comprises a light-emitting unit disposed on the back side of the liquid crystal optical element and configured to emit infrared light, and the liquid crystal display device has an outer shape corresponding to a region excluding regions corresponding to the imaging unit and the light-emitting unit in the liquid crystal optical element in the viewing direction of the inner mirror.

In an inner mirror according to an eighteenth embodiment based on the seventeenth embodiment, the inner mirror further comprises a black mask member disposed between the liquid crystal optical element and the light-emitting unit and having an outer shape overlapping at least the light-emitting unit and not overlapping the liquid crystal display device in the viewing direction.

In an inner mirror according to a nineteenth embodiment based on the eighteenth embodiment, the black mask member is formed of a visible-light-blocking and infrared-transmitting material.

In an inner mirror according to a twentieth embodiment based on the sixteenth embodiment, the liquid crystal display device has a backlight, and at least some light sources of the backlight are light sources capable of emitting infrared light.

In an inner mirror according to a twenty-first embodiment based on the first embodiment, the imaging unit is an infrared camera capable of capturing an infrared image, and the inner mirror further comprises a light-emitting unit disposed on the back side of the liquid crystal optical element and configured to emit infrared light, and a black mask member disposed between the liquid crystal optical element and the light-emitting unit.

In an inner mirror according to a twenty-second embodiment based on the twenty-first embodiment, the black mask member has a third region corresponding to at least the light-emitting unit in the viewing direction of the inner mirror and a fourth region other than the third region, and an infrared transmittance of the third region is higher than an infrared transmittance of the fourth region.

In an inner mirror according to a twenty-third embodiment based on the twenty-second embodiment, the third region of the black mask member is formed of a visible-light-blocking and infrared-transmitting material.

### EFFECTS OF THE INVENTION

According to the present invention, it is possible to provide an inner mirror suitable for achieving favorable image capturing by a built-in camera.

### BRIEF DESCRIPTION OF THE DRAWINGS

[FIG. 1] A diagram illustrating a configuration of an inner mirror according to a first embodiment.
[FIG. 2] A diagram illustrating a functional configuration of the inner mirror according to the first embodiment.
[FIG. 3] A cross-sectional view illustrating a schematic structure of the liquid crystal display according to the first embodiment.
[FIG. 4] A diagram illustrating a configuration of an inner mirror according to a second embodiment.
[FIG. 5] A diagram illustrating a functional configuration of the inner mirror according to the second embodiment.
[FIG. 6] A cross-sectional view illustrating a schematic structure of the liquid crystal display according to the second embodiment.
[FIG. 7] A cross-sectional view illustrating a schematic structure of a modified example of the liquid crystal display according to the second embodiment.
[FIG. 8] A cross-sectional view illustrating a schematic structure of a modified example of the liquid crystal display according to the second embodiment.
[FIG. 9] A diagram illustrating a configuration of an inner mirror according to a third embodiment.
[FIG. 10] A diagram illustrating a functional configuration of the inner mirror according to the third embodiment.
[FIG. 11] A diagram illustrating a configuration of an inner mirror according to a fourth embodiment.
[FIG. 12] A diagram illustrating a functional configuration of the inner mirror according to the fourth embodiment.
[FIG. 13] A diagram illustrating a configuration of an inner mirror according to a fifth embodiment.
[FIG. 14] A diagram illustrating a functional configuration of the inner mirror according to the fifth embodiment.

### DESCRIPTION OF EMBODIMENTS

Hereinafter, embodiments of the present invention will be described with reference to the drawings. However, the present invention is not limited to the embodiments described below. In the drawings, the same reference numerals denote the same members or elements, and redundant descriptions thereof will be omitted or simplified.

### <First embodiment>.

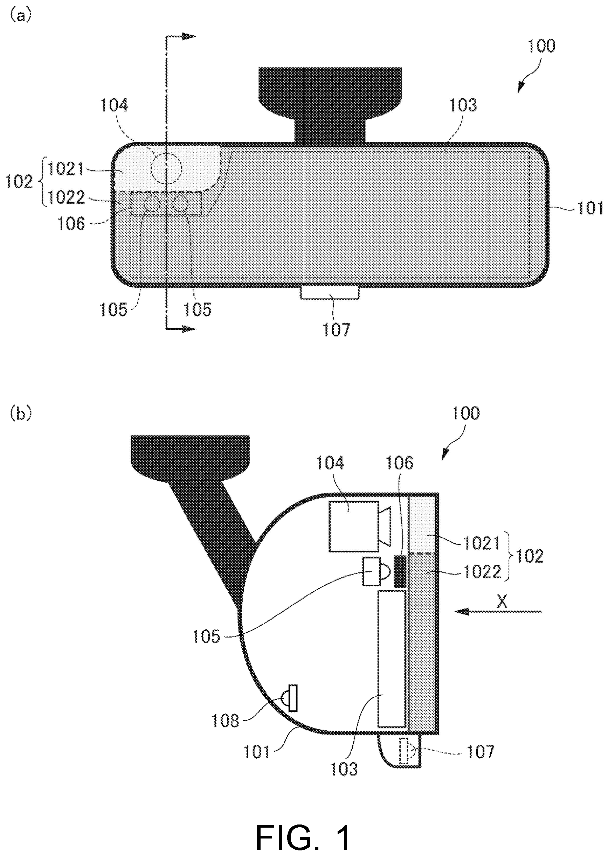

FIG. 1 is a diagram illustrating a configuration of an inner mirror 100 according to a first embodiment ((a) a front view, (b) a vertical sectional view).

The inner mirror 100 according to the first embodiment is configured as a liquid crystal anti-glare mirror with an image display function, and is installed, for example, at an upper end portion at a center in a vehicle width direction of a front window of a vehicle (not shown) such as a passenger car.

The inner mirror 100 has, as operation modes, a mirror mode (image display function OFF) and an image display mode (image display function ON). The mirror mode further includes, as operation states, a non-anti-glare state (anti-glare function OFF) and an anti-glare state (anti-glare function ON).

The inner mirror 100 includes a housing 101, a liquid crystal optical element 102, a liquid crystal display 103, an RGB (Red, Green, Blue)-IR (Infrared) camera 104, an IR light source 105, a black mask member 106, a rearward light sensor 107, an ambient light sensor 108, and the like.

The housing 101 is, for example, a plastic molded product forming an outer shape of the inner mirror 100, and has a shape opened toward the front of the inner mirror 100 (the rear of the vehicle). Inside the housing 101, the liquid crystal optical element 102, the liquid crystal display 103, the RGB-IR camera 104, the IR light source 105, the black mask member 106, and the like are accommodated. Inside the housing 101, the liquid crystal optical element 102 is disposed near the opening, and the liquid crystal display 103, the RGB-IR camera 104, the IR light source 105, the black mask member 106, and the like are disposed on the back side of the liquid crystal optical element 102.

The liquid crystal optical element 102 is an element electrically switchable between a reflective state and a transmissive state, and functions as a mirror element (mirror reflective surface). The liquid crystal optical element 102 has, for example, a configuration in which a liquid crystal cell is sandwiched between two polarizers, and is switchable, by controlling a driving voltage of the liquid crystal cell, between a state in which a visible light reflectance is high and a visible light transmittance is low (reflective state) and a state in which the visible light reflectance is low and the visible light transmittance is high (transmissive state). The liquid crystal optical element 102 has two independent regions, and the two regions are configured such that switching between the reflective state and the transmissive state is individually controllable. Here, the visible light reflectance and the visible light transmittance are the reflectance and the transmittance of light in a visible light region (a wavelength region of about 380 to 780 nm). The operating state of the liquid crystal optical element 102 may further include, in addition to the reflective state and the transmissive state, a state in which the visible light reflectance is higher than that in the transmissive state and lower than that in the reflective state (a low-reflectance reflective state).

Such a liquid crystal optical element 102 has a well-known configuration also referred to as a "shutter liquid crystal," a "mirror optical element," or the like, and a detailed description of the configuration and operation thereof will be omitted (see, for example, Japanese Patent Application Laid-Open No. 2009-008881, International Publication No. 2018/061676, Japanese Patent Application Laid-Open No. 2018-205363, Japanese Patent Application Laid-Open No. 2020-008753, and Japanese Patent Application Laid-Open No. 2021-110814).

With respect to the liquid crystal optical element 102, it was confirmed that the following infrared transmittance and visible light transmittance were obtained in an evaluation sample. Here, the infrared transmittance is the transmittance of light in an infrared region (a wavelength region of about 940 nm).

According to measurement results of the evaluation sample, the infrared transmittance of the liquid crystal optical element 102 was about 77.4% when the liquid crystal optical element 102 was in the reflective state and about 76.9% when the liquid crystal optical element 102 was in the transmissive state. That is, the infrared transmittance of the liquid crystal optical element 102 is maintained at a high transmittance with almost no change between the reflective state and the transmissive state. Therefore, regardless of whether the liquid crystal optical element 102 is in the reflective state or the transmissive state, favorable infrared imaging (capturing of an infrared image) with an IR camera or the like through the liquid crystal optical element 102 is possible.

The visible light transmittance of the liquid crystal optical element 102 was about 7.9% when the liquid crystal optical element 102 was in the reflective state and about 39.4% when the liquid crystal optical element 102 was in the transmissive state. If the visible light transmittance of the liquid crystal optical element 102 in the transmissive state is about 39.4%, visible light imaging (capturing of a visible light image) with a color camera or the like through the liquid crystal optical element 102 in the transmissive state is sufficiently possible.

The liquid crystal optical element 102 has, as two regions in which switching between the reflective state and the transmissive state is independently controllable, a camera region 1021 corresponding to the RGB-IR camera 104 in the viewing direction X of the inner mirror 100 and a main region 1022 other than the camera region 1021. That is, the liquid crystal optical element 102 corresponds to an integrated structure of two liquid crystal optical elements respectively forming the camera region 1021 and the main region 1022. Here, the viewing direction X of the inner mirror 100 is a direction perpendicular to a front surface (viewing surface) of the inner mirror 100.

The size, ratio, shape, arrangement, and the like of the camera region 1021 and the main region 1022 in the liquid crystal optical element 102 are arbitrary. However, since wiring must extend from an outer edge of the liquid crystal optical element 102 to a boundary between the camera region 1021 and the main region 1022, the camera region 1021 is disposed at a corner (for example, an upper left corner) of the liquid crystal optical element 102, thereby facilitating the routing of wiring to the boundary of the camera region 1021.

The camera region 1021 of the liquid crystal optical element 102 switches between the transmissive state and the reflective state in synchronization with the main region 1022 of the liquid crystal optical element 102 in the mirror mode, and is set to the reflective state in the image display mode. The camera region 1021 of the liquid crystal optical element 102 may be in the transmissive state in the image display mode. The camera region 1021 of the liquid crystal optical element 102 is set to the transmissive state when visible light imaging by the RGB-IR camera 104 is performed. The main region 1022 of the liquid crystal optical element 102 switches between the transmissive state and the reflective state in synchronization with the camera region 1021 of the liquid crystal optical element 102 in the mirror mode, and is set to the transmissive state in the image display mode.

The liquid crystal display 103 is disposed on the back side of the main region 1022 of the liquid crystal optical element 102. The liquid crystal display 103 has an outer shape corresponding to a region excluding a portion corresponding to the IR light source 105 from the main region 1022 of the liquid crystal optical element 102 in the viewing direction X of the inner mirror 100. The liquid crystal display 103 is in an OFF state in the mirror mode and in an ON state in the image display mode. The liquid crystal display 103 is capable of displaying an image of a rear side of the vehicle captured by the rear camera 116 or the like. The rear camera 116 is disposed, for example, at a central position in a vehicle width direction at a rear outside portion of the vehicle with an optical axis directed in a horizontal rearward direction of the vehicle.

The RGB-IR camera 104 is disposed on the back side of the liquid crystal optical element 102 (camera region 1021). The RGB-IR camera 104 is a camera capable of capturing a visible light image and an infrared image, and receives light incident through the liquid crystal optical element 102 (camera region 1021).

For example, the RGB-IR camera 104 has a pixel group for visible light image capturing and a pixel group for infrared image capturing, and an RGB image signal can be obtained using signals from the pixel group for visible light image capturing, and an IR image signal can be obtained using signals from the pixel group for infrared image capturing, by an image processing circuit or the like in a subsequent stage. The RGB-IR camera 104 may alternatively be configured using a separately provided color camera (RGB camera) and an IR camera.

The RGB-IR camera 104 is used, for example, to perform infrared imaging of a driver, an occupant, or the like in a vehicle cabin for the purpose of image recognition for driver monitoring/occupant monitoring in a DMS/OMS provided in the vehicle (such as drowsiness detection, gaze direction detection, face recognition, and occupant presence determination).

The RGB-IR camera 104 is turned on to acquire an IR image signal when infrared imaging for driver monitoring/occupant monitoring is requested by the DMS/OMS, and captures an infrared image by receiving light incident from the vehicle cabin through the liquid crystal optical element 102 (camera region 1021).

The RGB-IR camera 104 is also used, for example, to perform visible light imaging of a driver or an occupant in the vehicle cabin for purposes such as video conferencing or taking snapshots in the vehicle cabin.

The RGB-IR camera 104 is turned on to acquire an RGB image signal when visible light imaging for video conferencing or taking snapshots is requested by an operation of a switch mounted on the inner mirror 100 by a driver or an occupant, and captures a visible light image by receiving light incident from the vehicle cabin through the liquid crystal optical element 102 (camera region 1021).

The IR light source 105 is disposed on the back side of the main region 1022 of the liquid crystal optical element 102 (black mask member 106) and is capable of emitting infrared light. The IR light source 105 is turned on when infrared imaging by the RGB-IR camera 104 is performed and emits infrared light toward the vehicle cabin through the black mask member 106 and the main region 1022 of the liquid crystal optical element 102.

The black mask member 106 is disposed between the main region 2021 of the liquid crystal optical element 102 and the IR light source 105. The black mask member 106 has an outer shape that overlaps the IR light source 105 and does not overlap the camera region 1022 of the liquid crystal optical element 102 or the liquid crystal display 310 in the viewing direction X of the inner mirror 100.

For example, the black mask member 106 is formed of a visible-light-blocking and infrared-transmitting material that blocks (absorbs) visible light and transmits infrared light. As the visible-light-blocking and infrared-transmitting material forming the black mask member 106, for example, an "NIR (infrared) filter" manufactured by Nitto Jushi Kogyo Co., Ltd. / CLAREX may be used.

The rearward light sensor 107 detects a brightness (light intensity) of light from a rear of the vehicle (rearward light). The rearward light sensor 107 is disposed, for example, at a lower end of the housing 101 of the inner mirror 100 so as to face a front of the inner mirror 100 (the rear of the vehicle).

The ambient light sensor 108 detects a brightness (light intensity) of light from surroundings of the vehicle (ambient light). The ambient light sensor 108 is disposed on the housing 101 of the inner mirror 100 so as to face a rear of the inner mirror 100 (a front of the vehicle).

The detection result of the rearward light sensor 107 and the detection result of the ambient light sensor 108 are used for control of switching between the reflective state and the transmissive state of the liquid crystal optical element 102 and the like.

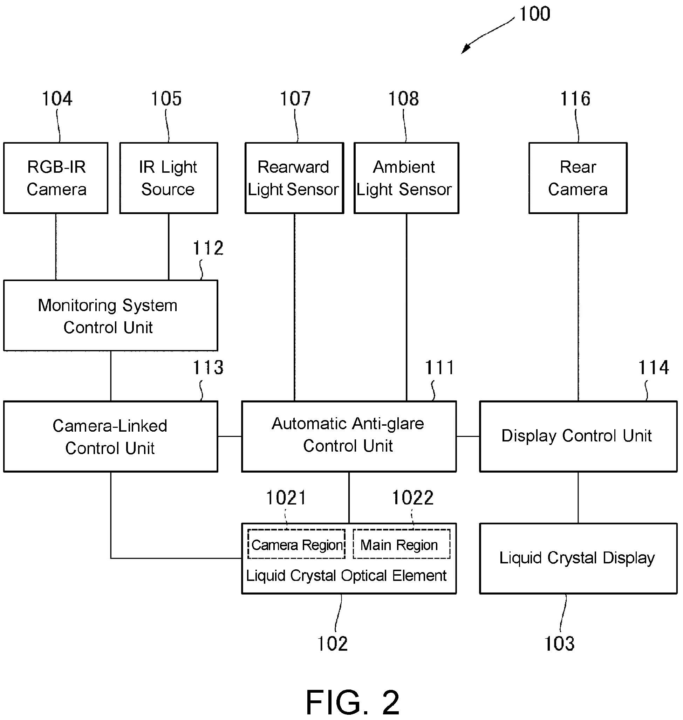

FIG. 2 is a diagram illustrating a functional configuration of the inner mirror 100 according to the first embodiment.

The inner mirror 100 includes an automatic anti-glare control unit 111, a monitoring system control unit 112, a camera-linked control unit 113, a display control unit 114, and the like.

For example, the automatic anti-glare control unit 111, the monitoring system control unit 112, the camera-linked control unit 113, and the display control unit 114 are implemented by a CPU (Central Processing Unit) or the like of a control board mounted in the inner mirror 100, are implemented by an ECU (Electronic Control Unit) mounted in the vehicle and configured to comprehensively control respective parts of the vehicle, or are implemented by a combination thereof.

The liquid crystal optical element 102, the rearward light sensor 107, and the ambient light sensor 108 are connected to the automatic anti-glare control unit 111. The automatic anti-glare control unit 111 sets the main region 1022 of the liquid crystal optical element 102 to the transmissive state in the image display mode. The automatic anti-glare control unit 111 may set both the camera region 1021 and the main region 1022 of the liquid crystal optical element 102 to the transmissive state in the image display mode.

In the mirror mode, the automatic anti-glare control unit 111 determines whether a transition from a non-anti-glare state to an anti-glare state or a transition from the anti-glare state to the non-anti-glare state is required, based on an intensity of rearward light and an intensity of ambient light detected by the rearward light sensor 107 and the ambient light sensor 108. Then, the automatic anti-glare control unit 111 switches the camera region 1021 and the main region 1022 of the liquid crystal optical element 102 between the transmissive state and the reflective state in accordance with the determination result.

For example, in the mirror mode, when the intensity of rearward light and the intensity of ambient light satisfy a predetermined condition for non-anti-glare, the automatic anti-glare control unit 111 determines that a transition from the non-anti-glare state to the anti-glare state is unnecessary and maintains the camera region 1021 and the main region 1022 of the liquid crystal optical element 102 in the reflective state. When the intensity of rearward light and the intensity of ambient light transition to a state satisfying a predetermined condition for anti-glare, the automatic anti-glare control unit 111 determines that a transition from the non-anti-glare state to the anti-glare state is required and switches the camera region 1021 and the main region 1022 of the liquid crystal optical element 102 from the reflective state to the transmissive state.

On the other hand, when the intensity of rearward light and the intensity of ambient light satisfy the predetermined condition for anti-glare, the automatic anti-glare control unit 111 determines that a transition from the anti-glare state to the non-anti-glare state is unnecessary and maintains the camera region 1021 and the main region 1022 of the liquid crystal optical element 102 in the transmissive state. When the intensity of rearward light and the intensity of ambient light transition to a state satisfying the predetermined condition for non-anti-glare, the automatic anti-glare control unit 111 determines that a transition from the anti-glare state to the non-anti-glare state is required and switches the camera region 1021 and the main region 1022 of the liquid crystal optical element 102 from the transmissive state to the reflective state.

The RGB-IR camera 104 and the IR light source 105 are connected to the monitoring system control unit 112. The liquid crystal optical element 102, the automatic anti-glare control unit 111, and the monitoring system control unit 112 are connected to the camera-linked control unit 113.

The monitoring system control unit 112 controls the RGB-IR camera 104 and the IR light source 105 for driver monitoring/occupant monitoring in response to instructions from the DMS/OMS. When infrared imaging by the RGB-IR camera 104 (imaging for driver monitoring/occupant monitoring) is requested by the DMS/OMS, the monitoring system control unit 112 turns on the RGB-IR camera 104 for acquisition of an IR image signal and also turns on the IR light source 105. At this time, for example, the IR light source 105 is intermittently driven in synchronization with a synchronization signal of the RGB-IR camera 104.

When visible light imaging by the RGB-IR camera 104 (imaging for video conferencing or taking snapshots) is requested via the DMS/OMS by a switch operation or the like by a driver or an occupant, the monitoring system control unit 112 instructs the camera-linked control unit 113 to transition the camera region 1021 of the liquid crystal optical element 102 to the transmissive state.

The camera-linked control unit 113 sets the camera region 1021 of the liquid crystal optical element 102 to the transmissive state based on the instruction from the monitoring system control unit 112. Then, the monitoring system control unit 112 turns on the RGB-IR camera 104 for acquisition of an RGB image signal.

The liquid crystal display 103, the automatic anti-glare control unit 111, and the rear camera 116 are connected to the display control unit 114. The display control unit 114 turns off the liquid crystal display 103 in the mirror mode.

In the image display mode, the display control unit 114 turns on the liquid crystal display 103 in accordance with the automatic anti-glare control unit 111 setting the main region 1022 of the liquid crystal optical element 102 to the transmissive state, and causes the liquid crystal display 103 to display an image of the rear of the vehicle captured by the rear camera 116 or the like.

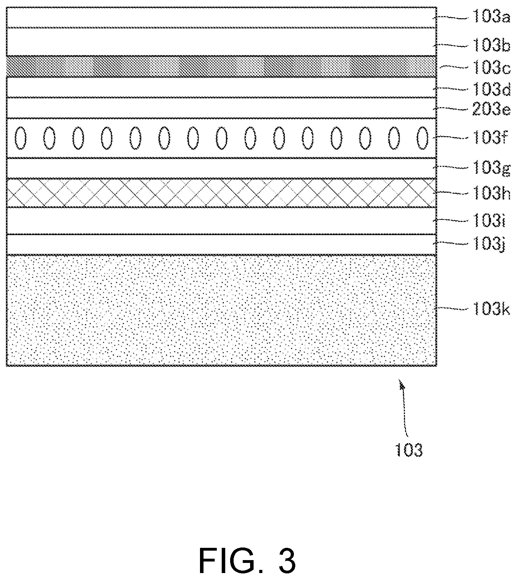

FIG. 3 is a cross-sectional view illustrating a schematic structure of the liquid crystal display 103 according to the first embodiment.

The liquid crystal display 103 is formed by stacking a plurality of functional layers. The liquid crystal display 103 includes a polarizer 103a, a glass substrate 103b, an RGB color filter 103c, an ITO (Indium Tin Oxide) transparent electrode film 103d, an alignment film 103e, a liquid crystal layer 103f, an alignment film 103g, a TFT (Thin Film Transistor) circuit and a transparent electrode film 103h, a glass substrate 103i, a polarizer 103j, and a backlight 103k. In the liquid crystal display 103, the functional layers 103a to 103k are sequentially arranged from the front side of the inner mirror 100 toward the back side thereof (i.e., from a rear of the vehicle toward a front of the vehicle).

The liquid crystal display 103 having such a configuration is of a well-known structure, and a detailed description of the configuration and operation thereof is omitted.

Here, the backlight 103k of the liquid crystal display 103 is configured using, for example, a light source that emits (radiates) visible light. However, some or all of the light sources of the backlight 103k of the liquid crystal display 103 may be changed from those that emit visible light to those that emit infrared light.

This allows the backlight 103k of the liquid crystal display 103 to also serve as the IR light source 105, thereby eliminating the need to provide the IR light source 105. By eliminating the need for the IR light source 105, it is possible to improve the degree of freedom in arranging components inside the housing 101 and to reduce costs by reducing the number of components.

When the IR light source 105 is not provided, the liquid crystal display 103 may have an outer shape corresponding to the main region 1022 of the liquid crystal optical element 102 in the viewing direction X of the inner mirror 100.

In this case, the outer shape of the liquid crystal display 103 becomes larger by an area corresponding to the region that corresponded to the IR light source 105 in the viewing direction X of the inner mirror 100. Thus, the display surface of the liquid crystal display 103 can be increased, and consequently, the image display area on the viewing surface of the inner mirror 100 can be increased.

Here, operations of the inner mirror 100 in the mirror mode (non-anti-glare state/anti-glare state) and operations in the image display mode will be described.

### [Operation in Mirror Mode (Non-Anti-Glare State / Anti-Glare State)]

The liquid crystal display 103 is set to the OFF state by the display control unit 114. In addition, the automatic anti-glare control unit 111 determines whether a transition from the non-anti-glare state to the anti-glare state or a transition from the anti-glare state to the non-anti-glare state is required.

When it is determined by the automatic anti-glare control unit 111 that a transition from the non-anti-glare state to the anti-glare state is unnecessary, the camera region 1021 and the main region 1022 of the liquid crystal optical element 102 are set to the reflective state (visible light reflectance: high) by the automatic anti-glare control unit 111. Accordingly, the operation mode of the inner mirror 100 becomes the mirror mode and the non-anti-glare state, and a reflected image in the non-anti-glare state appears on the viewing surface of the inner mirror 100. In addition, when the automatic anti-glare control unit 111 determines that a transition from the non-anti-glare state to the anti-glare state is required, the camera region 1021 and the main region 1022 of the liquid crystal optical element 102 are set to the transmissive state (visible light reflectance: low) by the automatic anti-glare control unit 111. Accordingly, the operation mode of the inner mirror 100 becomes the mirror mode and the anti-glare state, and a reflected image in the anti-glare state appears on the viewing surface of the inner mirror 100.

On the other hand, when the automatic anti-glare control unit 111 determines that a transition from the anti-glare state to the non-anti-glare state is unnecessary, the camera region 1021 and the main region 1022 of the liquid crystal optical element 102 are set to the transmissive state (visible light reflectance: low) by the automatic anti-glare control unit 111. Accordingly, the operation mode of the inner mirror 100 becomes the mirror mode and the anti-glare state, and a reflected image in the anti-glare state appears on the viewing surface of the inner mirror 100. In addition, when the automatic anti-glare control unit 111 determines that a transition from the anti-glare state to the non-anti-glare state is required, the camera region 1021 and the main region 1022 of the liquid crystal optical element 102 are set to the reflective state (visible light reflectance: high) by the automatic anti-glare control unit 111. Accordingly, the operation mode of the inner mirror 100 becomes the mirror mode and the non-anti-glare state, and a reflected image in the non-anti-glare state appears on the viewing surface of the inner mirror 100.

### [Operation in Image Display Mode]

The liquid crystal display 103 is set to the ON state by the display control unit 114, and an image of the rear of the vehicle captured by the rear camera 116 is displayed on the liquid crystal display 103. In addition, the main region 1022 of the liquid crystal optical element 102 is set to the transmissive state (visible light transmittance: high) by the automatic anti-glare control unit 111. As a result, an image of the rear of the vehicle captured by the rear camera 116 and displayed on the liquid crystal display 103 appears on the viewing surface of the inner mirror 100.

Next, operations of the inner mirror 100 during infrared imaging and visible light imaging by the built-in camera will be described. Note that the operations during infrared imaging and visible light imaging by the built-in camera are common to both the mirror mode (non-anti-glare state/anti-glare state) and the image display mode.

### [Operation During Infrared Imaging by the Built-in Camera]

When infrared imaging by the RGB-IR camera 104 is requested by the DMS/OMS, the IR light source 105 is set to the ON state by the monitoring system control unit 112 to emit infrared light, and the RGB-IR camera 104 is set to the ON state for acquisition of an IR image signal to capture an infrared image. At this time, for example, the IR light source 105 is intermittently driven in synchronization with a synchronization signal of the RGB-IR camera 104. Thus, infrared imaging by the RGB-IR camera 104 for driver monitoring/occupant monitoring is performed.

### [Operation During Visible Light Imaging by the Built-in Camera]

When visible light imaging by the RGB-IR camera 104 is requested by a switch operation or the like by a driver or an occupant, the camera region 1021 of the liquid crystal optical element 102 is set to the transmissive state (visible light transmittance: high) by the camera-linked control unit 113. Then, the RGB-IR camera 104 is set to the ON state by the monitoring system control unit 112 for acquisition of an RGB image signal and captures a visible light image. Thus, visible light imaging by the RGB-IR camera 104 for video conferencing or taking snapshots is performed.

In the inner mirror 100 according to the first embodiment as described above, the infrared transmittance of the liquid crystal optical element 102 (camera region 1021) is maintained at a high level regardless of the operating state (reflective state/transmissive state) of the liquid crystal optical element 102. Therefore, when infrared imaging is performed by the RGB-IR camera 104, it is not necessary to control the gain or the like of the RGB-IR camera 104 or the light intensity or the like of the IR light source 105 in accordance with the operating state of the liquid crystal optical element 102. Therefore, complicated control becomes unnecessary, control can be simplified, and power consumption can be suppressed.

In addition, the liquid crystal optical element 102 is configured such that the camera region 1021 and the main region 1022 can be independently controlled to switch between the reflective state and the transmissive state. Accordingly, when visible light imaging is performed by the RGB-IR camera 104, the camera region 1021 of the liquid crystal optical element 102 can be set to the transmissive state while maintaining the operating state (reflective state/transmissive state) of the main region 1022 of the liquid crystal optical element 102. Therefore, in the inner mirror 100, the operation of visible light imaging by the built-in camera can be executed without affecting the operation in the mirror mode or the image display mode.

In addition, the liquid crystal display 103 disposed on the back side of the main region 1022 of the liquid crystal optical element 102 has an outer shape corresponding to a region excluding a portion corresponding to the IR light source 105 from the main region 1022 of the liquid crystal optical element 102. Thus, a space for arranging the IR light source 105 can be easily secured on the back side of the main region 1022 of the liquid crystal optical element 102.

In addition, the black mask member 106 has an outer shape that overlaps the IR light source 105 and does not overlap the camera region 1021 of the liquid crystal optical element 102 or the liquid crystal display 103, and is formed of a visible-light blocking and infrared-transmitting material. Thus, a structure that prevents emission from the IR light source 105 from being noticed by a driver or an occupant can be easily achieved.

In addition, by configuring some or all of the light sources of the backlight 103k of the liquid crystal display 103 to emit infrared light, the backlight 103k of the liquid crystal display 103 can also serve as the IR light source 105, thereby making the IR light source 105 unnecessary. As a result, it can contribute to an increase in the degree of freedom in arranging components inside the housing 101 and to cost reduction due to a reduction in the number of components.

In addition, in this case, by configuring the liquid crystal display 103 to have an outer shape corresponding to the main region 1022 of the liquid crystal optical element 102, the outer shape of the liquid crystal display 103 can be enlarged by an amount corresponding to the region that corresponds to the IR light source 105. Thus, the display surface of the liquid crystal display 103 can be enlarged, and as a result, the image display region on the viewing surface of the inner mirror 100 can be enlarged.

As described above, the inner mirror 100 according to the first embodiment is suitable for achieving favorable imaging by the built-in camera.

### <Second embodiment>.

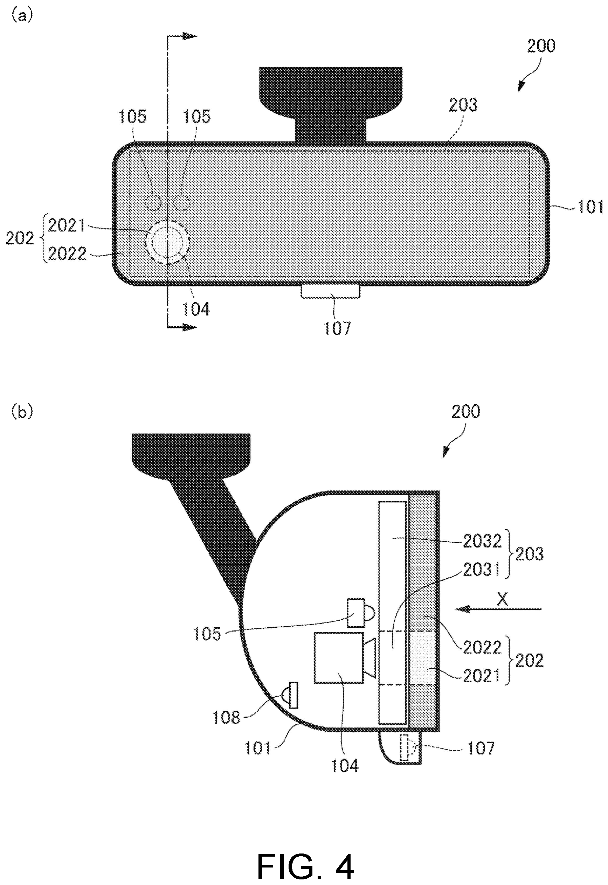

FIG. 4 is a diagram illustrating a configuration of an inner mirror 200 according to a second embodiment ((a) a front view, (b) a vertical sectional view).

The inner mirror 200 according to the second embodiment is configured as a liquid crystal anti-glare mirror with an image display function, and is installed, for example, at an upper end portion at the center in a vehicle width direction of a front window of a vehicle (not shown), such as a passenger car.

The inner mirror 200 has, as operation modes, a mirror mode (image display function OFF) and an image display mode (image display function ON). The mirror mode further includes, as operation states, a non-anti-glare state (anti-glare function OFF) and an anti-glare state (anti-glare function ON).

The inner mirror 200 includes a housing 101, a liquid crystal optical element 202, a liquid crystal display 203, an RGB-IR camera 104, an IR light source 105, a rearward light sensor 107, an ambient light sensor 108, and the like.

The liquid crystal optical element 202 corresponds to the liquid crystal optical element 102 of the first embodiment (FIG. 1), in which the size, ratio, shape, arrangement, and the like of the camera region 1021 and the main region 1022 are changed to form a camera region 2021 and a main region 2022.

The liquid crystal display 203 is disposed on the back side of the liquid crystal optical element 202. The liquid crystal display 203 has two regions. That is, the liquid crystal display 203 has a camera region 2031 corresponding to the RGB-IR camera 104 in the viewing direction X of the inner mirror 200, and a main region 2032 other than the camera region 2031.

The two regions of the liquid crystal display 203 respectively correspond to the two regions of the liquid crystal optical element 202. That is, the camera region 2031 of the liquid crystal display 203 corresponds to the camera region 2021 of the liquid crystal optical element 202, and the main region 2032 of the liquid crystal display 203 corresponds to the main region 2022 of the liquid crystal optical element 202.

The size, ratio, shape, arrangement, and the like of the camera region 2021 and the main region 2022 in the liquid crystal optical element 202 are arbitrary. However, the camera region 2031 of the liquid crystal display 203 always corresponds to the camera region 2021 of the liquid crystal optical element 202, and the main region 2032 of the liquid crystal display 203 always corresponds to the main region 2022 of the liquid crystal optical element 202.

The liquid crystal display 203 is in an OFF state in the mirror mode and in an ON state in the image display mode. The liquid crystal display 203 is capable of displaying an image of the rear side of the vehicle captured by the rear camera 116 or the like.

The RGB-IR camera 104 is disposed on the back side of the liquid crystal display 203. The RGB-IR camera 104 receives light incident from the vehicle interior through the camera region 2021 of the liquid crystal optical element 202 and the camera region 2031 of the liquid crystal display 203, and captures a visible light image and an infrared image.

The IR light source 105 is disposed on the back side of the liquid crystal display 203. The IR light source 105 emits infrared light toward the vehicle interior through the main region 2032 of the liquid crystal display 203 and the main region 2022 of the liquid crystal optical element 202.

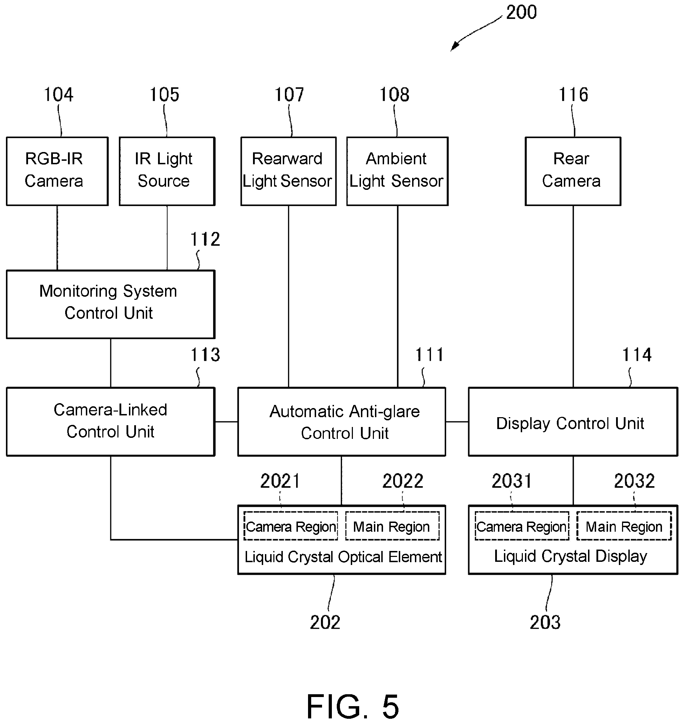

FIG. 5 is a diagram illustrating a functional configuration of the inner mirror 200 according to the second embodiment.

The inner mirror 200 includes an automatic anti-glare control unit 111, a monitoring system control unit 112, a camera-linked control unit 113, a display control unit 114, and the like.

In the second embodiment, control operations of the automatic anti-glare control unit 111, the camera-linked control unit 113, and the display control unit 114 are the same as the control operations in the first embodiment, except that the liquid crystal optical element 102 (camera region 1021, main region 1022) and the liquid crystal display 103 are replaced with the liquid crystal optical element 202 (camera region 2021, main region 2022) and the liquid crystal display 203. In the second embodiment, the control operation of the monitoring system control unit 112 is the same as the control operation in the first embodiment.

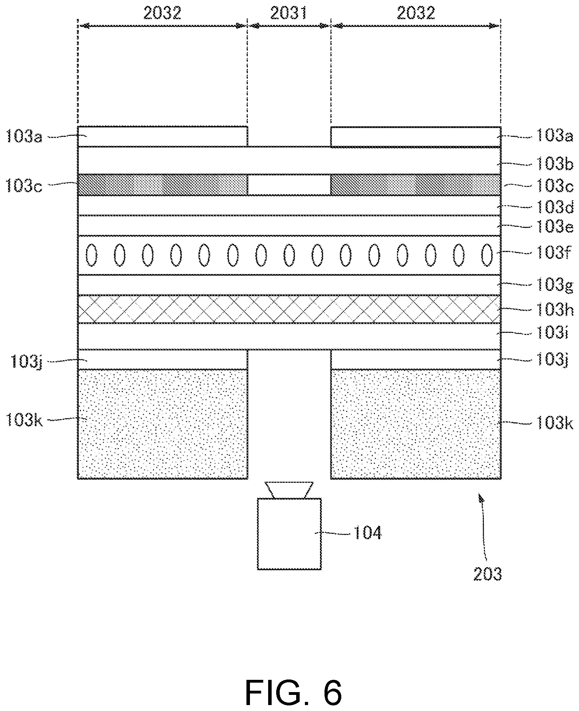

FIG. 6 is a cross-sectional view illustrating a schematic structure of the liquid crystal display 203 according to the second embodiment.

The liquid crystal display 203 corresponds to the liquid crystal display 103 of the first embodiment (FIG. 3), in which the polarizer 103a, the RGB color filter 103c, the polarizer 103j, and the backlight 103k are partially removed.

The liquid crystal display 203 is configured such that the visible light transmittance of the camera region 2031 is higher than the visible light transmittance of the main region 2032. Specifically, in the liquid crystal display 203, the polarizer 103a, the RGB color filter 103c, the polarizer 103j, and the backlight 103k are removed in the camera region 2031.

That is, the liquid crystal display 203 is configured such that the polarizer 103a, the RGB color filter 103c, the polarizer 103j, and the backlight 103k are absent in the camera region 2031.

Note that, in the liquid crystal display 203, only one of the polarizers 103a and 103j may be removed in the camera region 2031 instead of removing both of the polarizers 103a and 103j. In addition, the RGB-IR camera 104 may be disposed so as to be received in a gap formed by removal of the backlight 103k and the like in the camera region 2031 of the liquid crystal display 203.

With respect to the liquid crystal optical element 202 and the liquid crystal display, it was confirmed that the following infrared transmittance and visible light transmittance were obtained in an evaluation sample. Note that the infrared transmittance and the visible light transmittance of the liquid crystal optical element 202 are the same as the infrared transmittance and the visible light transmittance of the liquid crystal optical element 102 of the first embodiment.

As a measurement result of an evaluation sample, the visible light transmittance of the main region 2032 of the liquid crystal display 203 was approximately 0%. On the other hand, the visible light transmittance of the camera region 2031 of the liquid crystal display 203 (in which the polarizer 103a, the RGB color filter 103c, the polarizer 103j, and the backlight 103k are removed and absent) was approximately 56.7%.

In addition, the infrared transmittance of a configuration combining the camera region 2021 of the liquid crystal optical element 202 and the camera region 2031 of the liquid crystal display 203 was approximately 40.8% when the camera region 2021 of the liquid crystal optical element 202 was in the reflective state, and approximately 40.7% when the camera region 2021 of the liquid crystal optical element 202 was in the transmissive state.

That is, the infrared transmittance of this configuration hardly changes between the reflective state and the transmissive state of the camera region 2021 of the liquid crystal optical element 202. Therefore, infrared imaging with an IR camera or the like through the camera region 2021 of the liquid crystal optical element 202 and the camera region 2031 of the liquid crystal display 203 is sufficiently possible regardless of whether the camera region 2021 of the liquid crystal optical element 202 is in the reflective state or the transmissive state.

The visible light transmittance of a configuration combining the camera region 2021 of the liquid crystal optical element 202 and the camera region 2031 of the liquid crystal display 203 was approximately 4.5% when the camera region 2021 of the liquid crystal optical element 202 was in the reflective state, and approximately 22.3% when the camera region 2021 of the liquid crystal optical element 202 was in the transmissive state.

If the visible light transmittance of this configuration when the camera region 2021 of the liquid crystal optical element 202 is in the transmissive state is approximately 22.3%, visible light imaging with a color camera or the like through the camera region 2021 of the liquid crystal optical element 202 in the transmissive state and the camera region 2031 of the liquid crystal display 203 is possible.

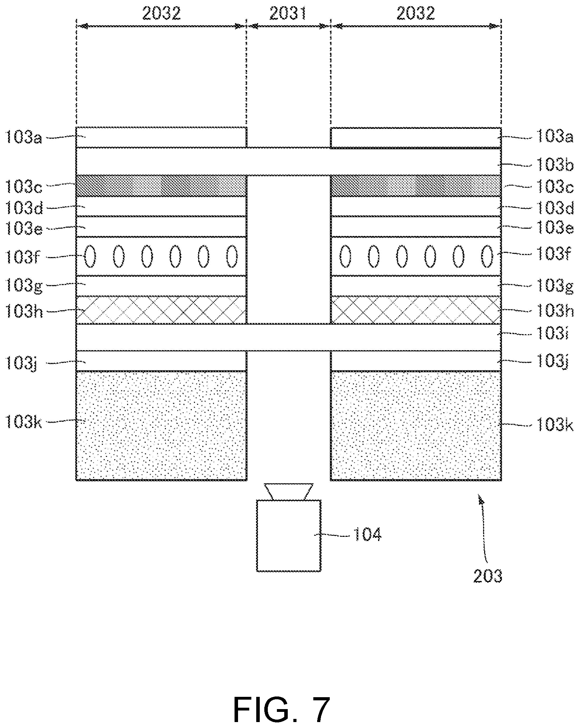

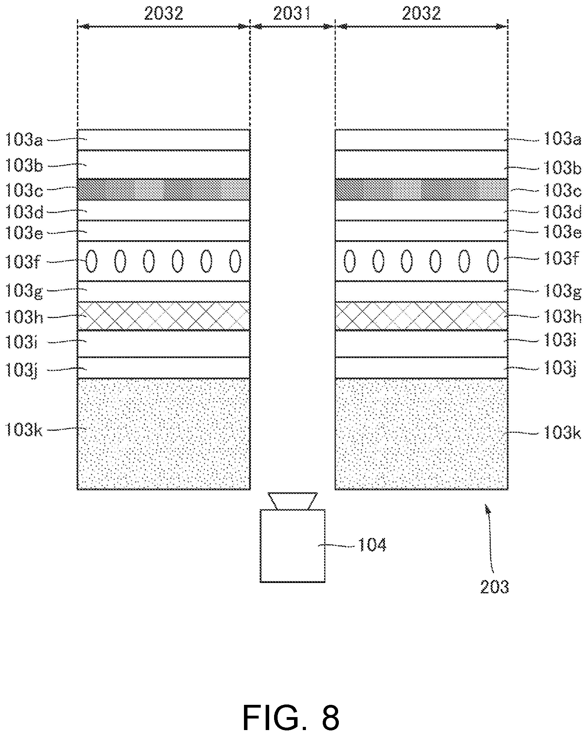

FIGS. 7 and 8 are sectional views showing schematic structures of modified examples of the liquid crystal display 203 of the second embodiment.

As shown in FIG. 7, the camera region 2031 of the liquid crystal display 203 may consist only of the glass substrate 103b and the glass substrate 103i, and the remaining functional layers may be absent (a gap). That is, the liquid crystal display 203 may be configured such that only the glass substrate 103b and the glass substrate 103i are present in the camera region 2031.

For such a modified example of the liquid crystal display 203, the visible light transmittance of the camera region 2031 of the liquid crystal display 203 obtained as a measurement result of an evaluation sample was approximately 81%. Therefore, favorable visible light imaging with a color camera or the like can be performed through the camera region 2021 of the liquid crystal optical element 202 in the transmissive state and the camera region 2031 of the liquid crystal display 203.

In addition, as shown in FIG. 8, in the camera region 2031 of the liquid crystal display 203, all of the members of the functional layers 103a to 103k may be absent (a gap). That is, the liquid crystal display 203 may be configured such that the camera region 2031 is completely hollow.

For such a modified example of the liquid crystal display 203, the visible light transmittance of the camera region 2031 of the liquid crystal display 203 obtained as a measurement result of an evaluation sample was approximately 100%. Therefore, even more favorable visible light imaging with a color camera or the like can be performed through the camera region 2021 of the liquid crystal optical element 202 in the transmissive state and the camera region 2031 of the liquid crystal display 203.

Here, the operation of the inner mirror 200 in the mirror mode and the operation in the image display mode correspond to those of the inner mirror 100 according to the first embodiment in the mirror mode and in the image display mode, in which the liquid crystal optical element 102 (camera region 1021, main region 1022) and the liquid crystal display 103 are replaced with the liquid crystal optical element 202 (camera region 2021, main region 2022) and the liquid crystal display 203.

In addition, the operation of the inner mirror 200 during infrared imaging and during visible light imaging by the built-in camera corresponds to that of the inner mirror 100 according to the first embodiment during infrared imaging and during visible light imaging by the built-in camera, in which the camera region 1021 of the liquid crystal optical element 102 is replaced with the camera region 2021 of the liquid crystal optical element 202.

The inner mirror 200 according to the second embodiment can also achieve effects similar to those of the inner mirror 100 according to the first embodiment. That is, the infrared transmittance of the liquid crystal optical element 202 (camera region 2021) is maintained at a high level regardless of the operating state (reflective state/transmissive state) of the liquid crystal optical element 202. Therefore, when infrared imaging is performed by the RGB-IR camera 104, it is not necessary to control the gain or the like of the RGB-IR camera 104 or the light intensity or the like of the IR light source 105 in accordance with the operating state of the liquid crystal optical element 202. Therefore, complicated control becomes unnecessary, control can be simplified, and power consumption can be suppressed.

In addition, the liquid crystal optical element 202 is configured such that the camera region 2021 and the main region 2022 can be independently controlled to switch between the reflective state and the transmissive state. Accordingly, when visible light imaging is performed by the RGB-IR camera 104, the camera region 2021 of the liquid crystal optical element 202 can be set to the transmissive state while maintaining the operating state (reflective state/transmissive state) of the main region 2022 of the liquid crystal optical element 202. Therefore, in the inner mirror 200, the operation of visible light imaging by the built-in camera can be executed without affecting the operation in the mirror mode or the image display mode.

In addition, the liquid crystal display 203 has the camera region 2031 and the main region 2032 and is configured such that the visible light transmittance of the camera region 2031 is higher than the visible light transmittance of the main region 2032. Accordingly, favorable visible light imaging with the RGB-IR camera 104 can be performed through the camera region 2021 of the liquid crystal optical element 202 in the transmissive state and the camera region 2031 of the liquid crystal display 203.

In addition, the liquid crystal display 203 is configured such that the polarizer 103a, the RGB color filter 103c, the polarizer 103j, and the backlight 103k are absent in the camera region 2031. Alternatively, the liquid crystal display 203 is configured such that only the glass substrate 103b and the glass substrate 103i are present in the camera region 2031. Alternatively, the liquid crystal display 203 is configured such that the camera region 2031 is hollow. This makes it possible to easily realize a structure in which the visible light transmittance of the camera region 2031 is higher than the visible light transmittance of the main region 2032 in the liquid crystal display 203.

As described above, the inner mirror 200 according to the second embodiment is suitable for achieving favorable imaging by the built-in camera.

### <Third embodiment>

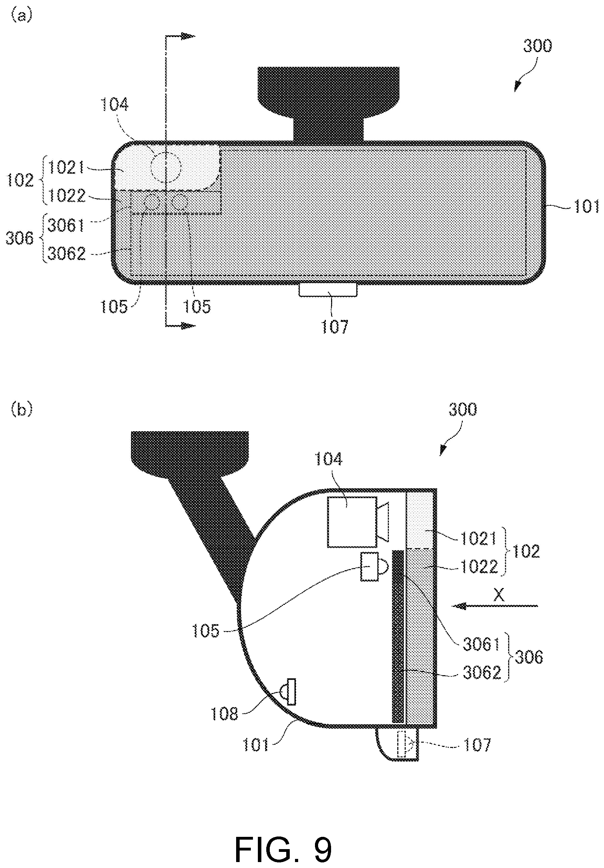

FIG. 9 is a diagram illustrating a configuration of an inner mirror 300 according to a third embodiment ((a) a front view, (b) a vertical sectional view).

The inner mirror 300 according to the third embodiment is configured as a liquid crystal anti-glare mirror and is installed, for example, at an upper end portion at a center in a vehicle width direction of a front window of a vehicle (not shown) such as a passenger car.

The inner mirror 300 has, as operating states, a non-anti-glare state (anti-glare function off) and an anti-glare state (anti-glare function on).

The inner mirror 300 has a housing 101, a liquid crystal optical element 102, an RGB-IR camera 104, an IR light source 105, a black mask member 306, a rearward light sensor 107, an ambient light sensor 108, and the like.

The inner mirror 300 corresponds to the inner mirror 100 according to the first embodiment (FIG. 1), in which the liquid crystal display 103 is not provided and the black mask member 306 is provided instead of the black mask member 106.

The black mask member 306 is disposed between the main region 1022 of the liquid crystal optical element 102 and the IR light source 105. The black mask member 306 has an outer shape that overlaps the IR light source 105 and does not overlap the camera region 1021 of the liquid crystal optical element 102 in the viewing direction X of the inner mirror 300.

In addition, the black mask member 306 has a first region 3061 corresponding to the IR light source 105 and a second region 3062 other than the first region 3061 in the viewing direction X of the inner mirror 300. The black mask member 306 is configured such that the infrared transmittance of the first region 3061 is higher than the infrared transmittance of the second region 3062.

For example, the first region 3061 of the black mask member 306 is formed of a visible-light-blocking and infrared-transmitting material (such as an NIR (infrared) filter manufactured by Nitto Jushi Kogyo Co., Ltd. / CLAREX). The second region 3062 of the black mask member 306 is formed of a visible-light-blocking material that blocks (absorbs) visible light (and transmits less infrared light than the visible-light-blocking and infrared-transmitting material).

Note that the black mask member 306 may be formed entirely of a visible-light-blocking and infrared-transmitting material, and the infrared transmittance may be uniform over the entire region.

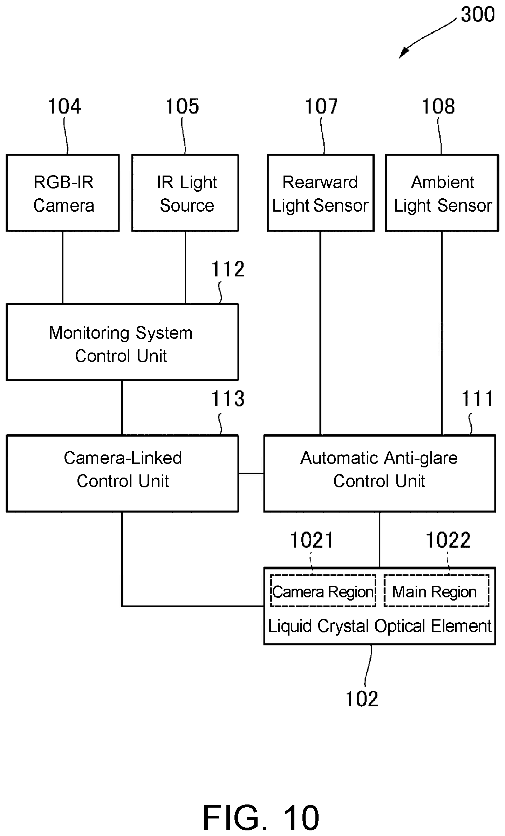

FIG. 10 is a diagram illustrating a functional configuration of the inner mirror 300 according to the third embodiment.

The inner mirror 300 includes an automatic anti-glare control unit 111, a monitoring system control unit 112, a camera-linked control unit 113 and the like. The control operations of the automatic anti-glare control unit 111, the monitoring system control unit 112, and the camera-linked control unit 113 in the third embodiment are the same as those in the first embodiment.

Here, the operation of the inner mirror 300 in the non-anti-glare state and the anti-glare state will be described. Note that the operation of the inner mirror 300 during infrared imaging and visible light imaging by the built-in camera is the same as the operation of the inner mirror 100 according to the first embodiment during infrared imaging and visible light imaging by the built-in camera.

### [Operation in the Non-Anti-Glare State / Anti-Glare State]

The automatic anti-glare control unit 111 determines whether a transition from the non-anti-glare state to the anti-glare state or a transition from the anti-glare state to the non-anti-glare state is required.

When it is determined by the automatic anti-glare control unit 111 that a transition from the non-anti-glare state to the anti-glare state is unnecessary, the camera region 1021 and the main region 1022 of the liquid crystal optical element 102 are set to the reflective state (visible light reflectance: high) by the automatic anti-glare control unit 111. Accordingly, the operating state of the inner mirror 300 becomes the non-anti-glare state, and a reflection image in the non-anti-glare state appears on the viewing surface of the inner mirror 300. In addition, when the automatic anti-glare control unit 111 determines that a transition from the non-anti-glare state to the anti-glare state is required, the camera region 1021 and the main region 1022 of the liquid crystal optical element 102 are set to the transmissive state (visible light reflectance: low) by the automatic anti-glare control unit 111. Accordingly, the operating state of the inner mirror 300 becomes the anti-glare state, and a reflection image in the anti-glare state appears on the viewing surface of the inner mirror 300.

On the other hand, when the automatic anti-glare control unit 111 determines that a transition from the anti-glare state to the non-anti-glare state is unnecessary, the camera region 1021 and the main region 1022 of the liquid crystal optical element 102 are set to the transmissive state (visible light reflectance: low) by the automatic anti-glare control unit 111. Accordingly, the operating state of the inner mirror 300 becomes the anti-glare state, and a reflection image in the anti-glare state appears on the viewing surface of the inner mirror 300. In addition, when the automatic anti-glare control unit 111 determines that a transition from the anti-glare state to the non-anti-glare state is required, the camera region 1021 and the main region 1022 of the liquid crystal optical element 102 are set to the reflective state (visible light reflectance: high) by the automatic anti-glare control unit 111. Accordingly, the operating state of the inner mirror 300 becomes the non-anti-glare state, and a reflection image in the non-anti-glare state appears on the viewing surface of the inner mirror 300.

Accordingly, effects similar to those of the inner mirror 100 according to the first embodiment (a liquid crystal anti-glare mirror with an image display function) can also be obtained in the inner mirror 300 according to the third embodiment (a liquid crystal anti-glare mirror without an image display function). That is, the infrared transmittance of the liquid crystal optical element 102 (camera region 1021) is maintained at a high level regardless of the operating state (reflective state/transmissive state) of the liquid crystal optical element 102. Therefore, when infrared imaging is performed by the RGB-IR camera 104, it is not necessary to control the gain or the like of the RGB-IR camera 104 or the light intensity or the like of the IR light source 105 in accordance with the operating state of the liquid crystal optical element 102. Therefore, complicated control becomes unnecessary, control can be simplified, and power consumption can be suppressed.

In addition, the liquid crystal optical element 102 is configured such that the camera region 1021 and the main region 1022 can be independently controlled to switch between the reflective state and the transmissive state. Accordingly, when visible light imaging is performed by the RGB-IR camera 104, the camera region 1021 of the liquid crystal optical element 102 can be set to the transmissive state while maintaining the operating state (reflective state/transmissive state) of the main region 1022 of the liquid crystal optical element 102. Therefore, in the inner mirror 300, the operation of visible light imaging by the built-in camera can be executed without affecting the operation in the mirror mode or the image display mode.

In addition, the black mask member 306 has an outer shape that overlaps the IR light source 105 and does not overlap the camera region 1021 of the liquid crystal optical element 102. The black mask member 306 has a first region 3061 and a second region 3062, and is configured such that the infrared transmittance of the first region 3061 is higher than the infrared transmittance of the second region 3062. The first region 3061 of the black mask member 306 is formed of a visible-light-blocking and infrared-transmitting material. Thus, a structure that prevents emission from the IR light source 105 from being noticed by a driver or an occupant can be easily achieved.

As described above, the inner mirror 300 according to the third embodiment is suitable for achieving favorable imaging by the built-in camera.

### <Fourth embodiment>

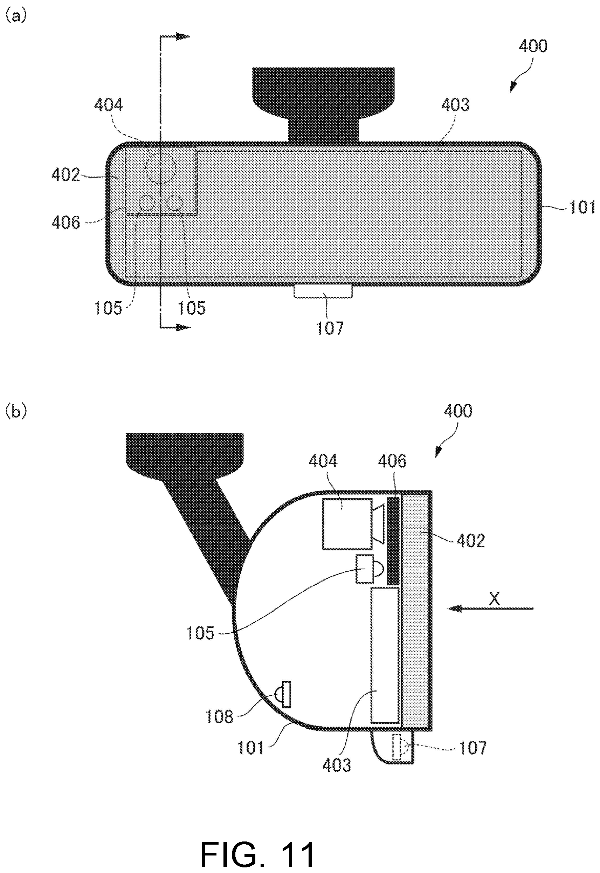

FIG. 11 is a diagram illustrating a configuration of an inner mirror 400 according to a fourth embodiment ((a) a front view, (b) a vertical sectional view).

The inner mirror 400 according to the fourth embodiment is configured as a liquid crystal anti-glare mirror with an image display function, and is installed, for example, at an upper end portion at a center in a vehicle width direction of a front window of a vehicle (not shown) such as a passenger car.

The inner mirror 400 has, as operation modes, a mirror mode (image display function OFF) and an image display mode (image display function ON). The mirror mode further includes, as operation states, a non-anti-glare state (anti-glare function OFF) and an anti-glare state (anti-glare function ON).

The inner mirror 400 has a housing 101, a liquid crystal optical element 402, a liquid crystal display 403, an IR camera 404, an IR light source 105, a black mask member 406, a rearward light sensor 107, an ambient light sensor 108, and the like.

The inner mirror 400 corresponds to the inner mirror 100 according to the first embodiment (FIG. 1), in which the liquid crystal optical element 402, the liquid crystal display 403, the IR camera 404, and the black mask member 406 are provided instead of the liquid crystal optical element 102, the liquid crystal display 103, the RGB-IR camera 104, and the black mask member 106.

The liquid crystal optical element 402 corresponds to the liquid crystal optical element 102 of the first embodiment (FIG. 1), in which the camera region 1021 is not provided and the entire region is the main region 1022.

The liquid crystal display 403 corresponds to the liquid crystal display 103 of the first embodiment (FIG. 1), in which the outer shape is changed. The liquid crystal display 403 is disposed on the back side of the liquid crystal optical element 402. The liquid crystal display 403 has an outer shape corresponding to a region excluding regions corresponding to the IR camera 404 and the IR light source 105 in the liquid crystal optical element 402 in the viewing direction X of the inner mirror 400.

The IR camera 404 is disposed on the back side of the liquid crystal display 402. The IR camera 404 is a camera capable of capturing an infrared image and receives light incident through the liquid crystal optical element 402. For example, the IR camera 404 has a pixel group for infrared image capturing, and an IR image signal can be obtained using signals from the pixel group for infrared image capturing by a subsequent-stage image processing circuit or the like.

The IR camera 404 is used, for example, to capture infrared images of a driver and occupants in the vehicle interior for the purpose of image recognition for driver monitoring / occupant monitoring in a DMS/OMS mounted in the vehicle.

The IR camera 404 is turned on to acquire an IR image signal when infrared imaging for driver monitoring/occupant monitoring is requested by the DMS/OMS, and captures an infrared image by receiving light incident from the vehicle cabin through the liquid crystal optical element 402.

The black mask member 406 is disposed between the liquid crystal optical element 402 and the IR light source 105. The black mask member 406 has an outer shape that overlaps at least the IR light source 105 and does not overlap the liquid crystal display 403 in the viewing direction X of the inner mirror 400.

For example, the black mask member 406 has an outer shape that overlaps the IR camera 404 and the IR light source 105 and does not overlap the liquid crystal display 403 in the viewing direction X of the inner mirror 400. The black mask member 406 is formed of a visible-light-blocking and infrared-transmitting material (such as an NIR (infrared) filter manufactured by Nitto Jushi Kogyo Co., Ltd. / CLAREX).

Note that, also in the fourth embodiment, as in the first embodiment, the backlight 103k (FIG. 3) of the liquid crystal display 403 may include at least one light source capable of emitting infrared light. This allows the backlight 103k of the liquid crystal display 403 to also serve as the IR light source 105, thereby eliminating the need to provide the IR light source 105.

In addition, when the IR light source 105 is not provided, the liquid crystal display 403 may have an outer shape corresponding to a region excluding a region corresponding to the IR camera 404 in the liquid crystal optical element 402 in the viewing direction X of the inner mirror 400. In this case, the outer shape of the liquid crystal display 403 becomes larger by an area corresponding to the region that corresponded to the IR light source 105 in the viewing direction X of the inner mirror 400.

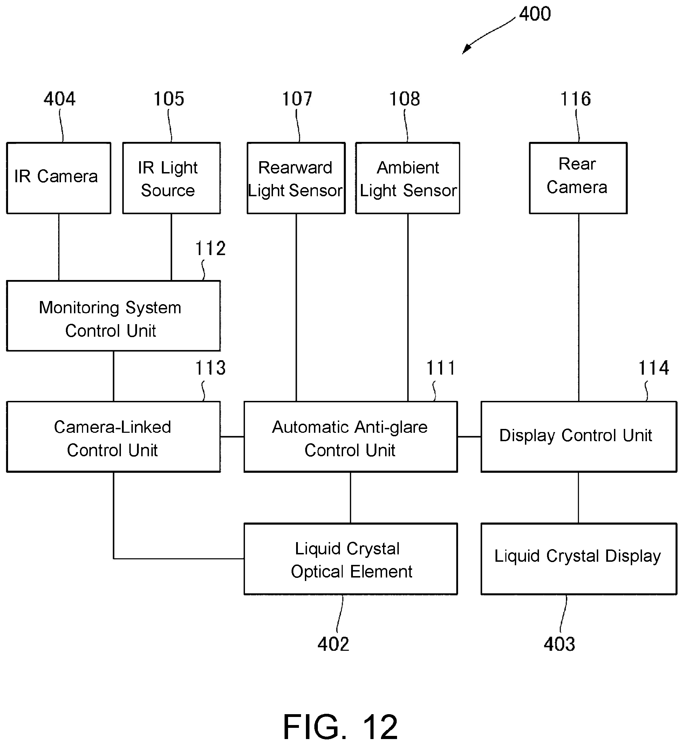

FIG. 12 is a diagram illustrating a functional configuration of the inner mirror 400 according to the fourth embodiment.

The inner mirror 400 includes an automatic anti-glare control unit 111, a monitoring system control unit 112, a camera-linked control unit 113, a display control unit 114, and the like.

In the fourth embodiment, the control operations of the automatic anti-glare control unit 111 and the display control unit 114 are the same as the control operations in the first embodiment, except that the camera region 1021 and the main region 1022 of the liquid crystal optical element 102 are replaced with the liquid crystal optical element 402.

The IR camera 404 and the IR light source 105 are connected to the monitoring system control unit 112. The liquid crystal optical element 402, the automatic anti-glare control unit 111, and the monitoring system control unit 112 are connected to the camera-linked control unit 113.

The monitoring system control unit 112 controls the IR camera 404 and the IR light source 105 for driver monitoring/occupant monitoring in response to instructions from the DMS/OMS. When infrared imaging by the IR camera 404 (imaging for driver monitoring/occupant monitoring) is requested by the DMS/OMS, the monitoring system control unit 112 turns on the IR camera 404 for acquisition of an IR image signal and also turns on the IR light source 105. At this time, for example, the IR light source 105 is intermittently driven in synchronization with a synchronization signal of the IR camera 404.

Note that it is also possible for the monitoring system control unit 112 to instruct the camera-linked control unit 113 to transition the liquid crystal optical element 402 to the transmissive state (or the reflective state), and for the camera-linked control unit 113 to set the liquid crystal optical element 402 to the transmissive state (or the reflective state) based on the instruction from the monitoring system control unit 112.

Here, operations of the inner mirror 400 in the mirror mode (non-anti-glare state/anti-glare state) and operations in the image display mode will be described.

### [Operation in Mirror Mode (Non-Anti-Glare State / Anti-Glare State)]

The liquid crystal display 403 is set to the OFF state by the display control unit 114. In addition, the automatic anti-glare control unit 111 determines whether a transition from the non-anti-glare state to the anti-glare state or a transition from the anti-glare state to the non-anti-glare state is required.

When the automatic anti-glare control unit 111 determines that a transition from the non-anti-glare state to the anti-glare state is unnecessary, the liquid crystal optical element 402 is set to the reflective state (visible light reflectance: high) by the automatic anti-glare control unit 111. Accordingly, the operation mode of the inner mirror 400 becomes the mirror mode and the non-anti-glare state, and a reflected image in the non-anti-glare state appears on the viewing surface of the inner mirror 400. In addition, when the automatic anti-glare control unit 111 determines that a transition from the non-anti-glare state to the anti-glare state is required, the liquid crystal optical element 402 is set to the transmissive state (visible light reflectance: low) by the automatic anti-glare control unit 111. Accordingly, the operation mode of the inner mirror 400 becomes the mirror mode and the anti-glare state, and a reflected image in the anti-glare state appears on the viewing surface of the inner mirror 400.

On the other hand, when the automatic anti-glare control unit 111 determines that a transition from the anti-glare state to the non-anti-glare state is unnecessary, the liquid crystal optical element 402 is set to the transmissive state (visible light reflectance: low) by the automatic anti-glare control unit 111. Accordingly, the operation mode of the inner mirror 400 becomes the mirror mode and the anti-glare state, and a reflected image in the anti-glare state appears on the viewing surface of the inner mirror 400. In addition, when the automatic anti-glare control unit 111 determines that a transition from the anti-glare state to the non-anti-glare state is required, the liquid crystal optical element 402 is set to the reflective state (visible light reflectance: high) by the automatic anti-glare control unit 111. Accordingly, the operation mode of the inner mirror 400 becomes the mirror mode and the non-anti-glare state, and a reflected image in the non-anti-glare state appears on the viewing surface of the inner mirror 400.

### [Operation in Image Display Mode]

The liquid crystal display 403 is set to the ON state by the display control unit 114, and an image of the rear of the vehicle captured by the rear camera 116 is displayed on the liquid crystal display 403. In addition, the liquid crystal optical element 402 is set to the transmissive state (visible light transmittance: high) by the automatic anti-glare control unit 111. As a result, an image of the rear of the vehicle captured by the rear camera 116 and displayed on the liquid crystal display 403 appears on the viewing surface of the inner mirror 400.

Next, the operation of the inner mirror 400 during infrared imaging by the built-in camera will be described. Note that the operations during infrared imaging by the built-in camera are common to both the mirror mode (non-anti-glare state/anti-glare state) and the image display mode.

### [Operation During Infrared Imaging by the Built-in Camera]

When infrared imaging by the IR camera 404 is requested by the DMS/OMS, the IR light source 105 is set to the ON state by the monitoring system control unit 112 to emit infrared light, and the IR camera 404 is set to the ON state for acquisition of an IR image signal to capture an infrared image. At this time, for example, the IR light source 105 is intermittently driven in synchronization with a synchronization signal of the IR camera 404. Thus, infrared imaging by the IR camera 404 for driver monitoring/occupant monitoring is performed.

The inner mirror 400 according to the fourth embodiment can also achieve effects similar to those of the inner mirror 100 according to the first embodiment. That is, the infrared transmittance of the liquid crystal optical element 402 is maintained at a high level regardless of the operating state (reflective state/transmissive state) of the liquid crystal optical element 402. Therefore, when infrared imaging is performed by the IR camera 404, it is not necessary to control the gain or the like of the IR camera 404 or the light intensity or the like of the IR light source 105 in accordance with the operating state of the liquid crystal optical element 402. Therefore, complicated control becomes unnecessary, control can be simplified, and power consumption can be suppressed.

In addition, the liquid crystal display 403 disposed on the back side of the liquid crystal optical element 402 has an outer shape corresponding to a region excluding regions corresponding to the IR camera 404 and the IR light source 105 in the liquid crystal optical element 402. This makes it possible to easily secure installation space for the IR camera 404 and the IR light source 105 on the back side of the liquid crystal optical element 402.

In addition, the black mask member 406 has an outer shape that overlaps at least the IR light source 105 and does not overlap the liquid crystal display 403, and is made of a visible-light-blocking and infrared-transmitting material. Thus, a structure that prevents emission from the IR light source 105 from being noticed by a driver or an occupant can be easily achieved.

In addition, by configuring some or all of the light sources of the backlight 103k of the liquid crystal display 403 to emit infrared light, the backlight 103k of the liquid crystal display 403 can also serve as the IR light source 105, thereby making the IR light source 105 unnecessary. As a result, it can contribute to an increase in the degree of freedom in arranging components inside the housing 101 and to cost reduction due to a reduction in the number of components.

In addition, in this case, by configuring the liquid crystal display 403 to have an outer shape corresponding to a region excluding a region corresponding to the IR camera 404 in the liquid crystal optical element 402, the outer shape of the liquid crystal display 403 can be enlarged by an amount corresponding to a region that had corresponded to the IR light source 105. Thus, the display surface of the liquid crystal display 403 can be enlarged, and as a result, the image display region on the viewing surface of the inner mirror 400 can be enlarged.

As described above, the inner mirror 400 according to the fourth embodiment is suitable for achieving favorable imaging by the built-in camera.

### <Fifth embodiment>.

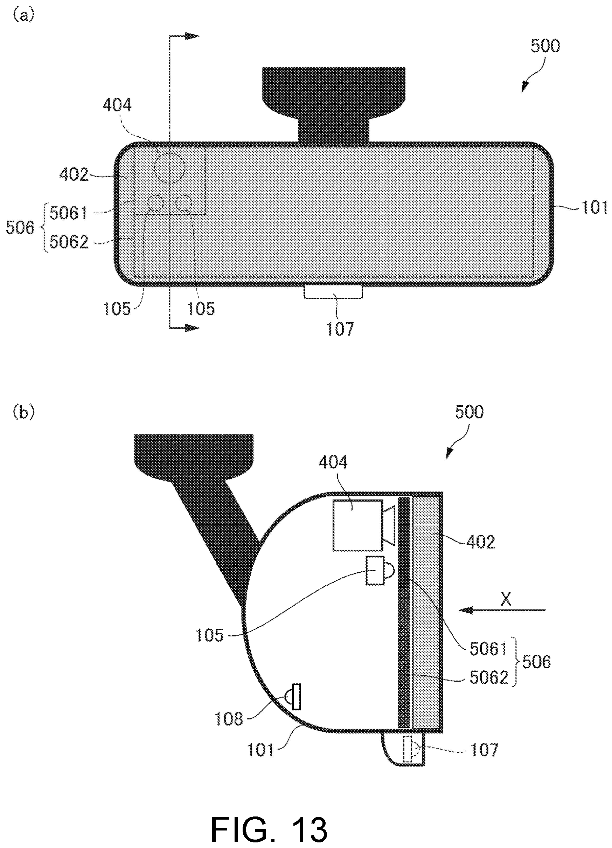

FIG. 13 is a diagram illustrating a configuration of an inner mirror 500 according to a fifth embodiment ((a) a front view, (b) a vertical sectional view).

The inner mirror 500 according to the fifth embodiment is configured as a liquid crystal anti-glare mirror and is installed, for example, at an upper end portion at a center in a vehicle width direction of a front window of a vehicle (not shown) such as a passenger car.

The inner mirror 500 has, as operating states, a non-anti-glare state (anti-glare function off) and an anti-glare state (anti-glare function on).

The inner mirror 500 has a housing 101, a liquid crystal optical element 402, an IR camera 404, an IR light source 105, a black mask member 506, a rearward light sensor 107, an ambient light sensor 108, and the like.

The inner mirror 500 corresponds to the inner mirror 400 according to the fourth embodiment (FIG. 11), in which the liquid crystal display 103 is not provided and the black mask member 506 is provided instead of the black mask member 406.

The black mask member 506 is disposed between the liquid crystal optical element 402 and both the IR camera 404 and the IR light source 105. The black mask member 506 has a third region 5061 corresponding to the IR camera 404 and the IR light source 105 in the viewing direction X of the inner mirror 500, and a fourth region 5062 other than the third region 5061.

Note that the third region 5061 of the black mask member 506 does not necessarily have to correspond to both the IR camera 404 and the IR light source 105, and may correspond to at least the IR light source 105.

The black mask member 506 is configured such that the infrared transmittance of the third region 5061 is higher than the infrared transmittance of the fourth region 5062. For example, the third region 5061 of the black mask member 506 is formed of a visible-light-blocking and infrared-transmitting material (such as an NIR (infrared) filter manufactured by Nitto Jushi Kogyo Co., Ltd. / CLAREX), and the fourth region 5062 of the black mask member 506 is formed of a visible-light-blocking material.

Note that the black mask member 506 may be formed entirely of a visible-light-blocking and infrared-transmitting material, and the infrared transmittance may be uniform over the entire region.

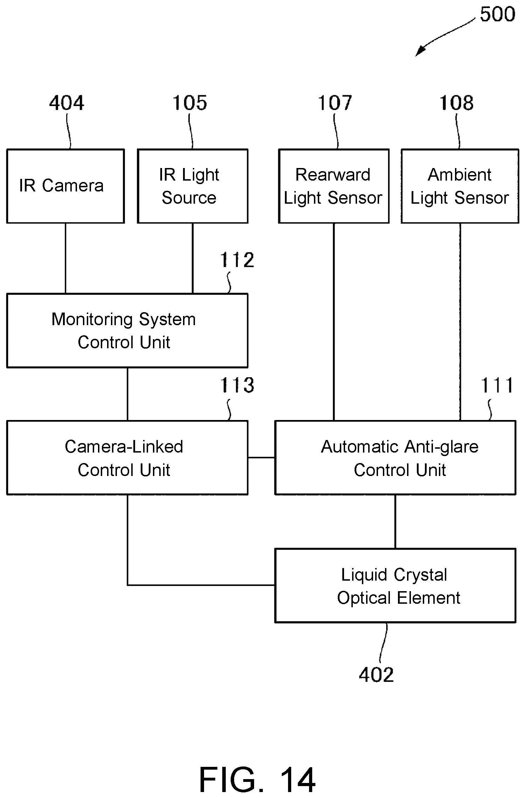

FIG. 14 is a diagram illustrating a functional configuration of the inner mirror 500 according to the fifth embodiment.

The inner mirror 500 includes an automatic anti-glare control unit 111, a monitoring system control unit 112, a camera-linked control unit 113 and the like. The control operations of the automatic anti-glare control unit 111, the monitoring system control unit 112, and the camera-linked control unit 113 in the fifth embodiment are the same as those in the fourth embodiment.

Here, the operation of the inner mirror 500 in the non-anti-glare state and the anti-glare state will be described. Note that the operation of the inner mirror 500 during infrared imaging by the built-in camera is the same as the operation of the inner mirror 400 according to the fourth embodiment during infrared imaging by the built-in camera.

### [Operation in the Non-Anti-Glare State / Anti-Glare State]

The automatic anti-glare control unit 111 determines whether a transition from the non-anti-glare state to the anti-glare state or a transition from the anti-glare state to the non-anti-glare state is required.

When the automatic anti-glare control unit 111 determines that a transition from the non-anti-glare state to the anti-glare state is unnecessary, the liquid crystal optical element 402 is set to the reflective state (visible light reflectance: high) by the automatic anti-glare control unit 111. Accordingly, the operating state of the inner mirror 500 becomes the non-anti-glare state, and a reflection image in the non-anti-glare state appears on the viewing surface of the inner mirror 500. In addition, when the automatic anti-glare control unit 111 determines that a transition from the non-anti-glare state to the anti-glare state is required, the liquid crystal optical element 402 is set to the transmissive state (visible light reflectance: low) by the automatic anti-glare control unit 111. Accordingly, the operating state of the inner mirror 500 becomes the anti-glare state, and a reflection image in the anti-glare state appears on the viewing surface of the inner mirror 500.

On the other hand, when the automatic anti-glare control unit 111 determines that a transition from the anti-glare state to the non-anti-glare state is unnecessary, the liquid crystal optical element 402 is set to the transmissive state (visible light reflectance: low) by the automatic anti-glare control unit 111. Accordingly, the operating state of the inner mirror 500 becomes the anti-glare state, and a reflection image in the anti-glare state appears on the viewing surface of the inner mirror 500. In addition, when the automatic anti-glare control unit 111 determines that a transition from the anti-glare state to the non-anti-glare state is required, the liquid crystal optical element 402 is set to the reflective state (visible light reflectance: high) by the automatic anti-glare control unit 111. Accordingly, the operating state of the inner mirror 500 becomes the non-anti-glare state, and a reflection image in the non-anti-glare state appears on the viewing surface of the inner mirror 500.

Accordingly, effects similar to those of the inner mirror 400 according to the fourth embodiment (a liquid crystal anti-glare mirror with an image display function) can also be obtained in the inner mirror 500 according to the fifth embodiment (a liquid crystal anti-glare mirror without an image display function). That is, the infrared transmittance of the liquid crystal optical element 402 is maintained at a high level regardless of the operating state (reflective state/transmissive state) of the liquid crystal optical element 402. Therefore, when infrared imaging is performed by the IR camera 404, it is not necessary to control the gain or the like of the IR camera 404 or the light intensity or the like of the IR light source 105 in accordance with the operating state of the liquid crystal optical element 402. Therefore, complicated control becomes unnecessary, control can be simplified, and power consumption can be suppressed.

In addition, the black mask member 506 disposed between the liquid crystal optical element 402 and the IR light source 105 has the third region 5061 and the fourth region 5062, and is configured such that an infrared transmittance of the third region 5061 is higher than an infrared transmittance of the fourth region 5062. The third region 5061 of the black mask member 506 is formed of a visible-light-blocking and infrared-transmitting material. Thus, a structure that prevents emission from the IR light source 105 from being noticed by a driver or an occupant can be easily achieved.

As described above, the inner mirror 500 according to the fifth embodiment is suitable for achieving favorable imaging by the built-in camera.

Although embodiments of the present invention have been described above, the present invention is not limited to these embodiments, and various modifications and changes may be made within the scope of the gist of the present invention.

This application claims priority based on Japanese Patent Application No. 2023-200818 filed on November 28, 2023, and incorporates herein by reference all the contents described in the Japanese application.

### REFERENCE SIGNS LIST

100: inner mirror 101: housing 102: liquid crystal optical element 1021: camera region 1022: main region 103: liquid crystal display (liquid crystal display device) 103a: polarizer (front polarizer) 103b: glass substrate 103c: RGB color filter (color filter) 103d: ITO transparent electrode film 103e: alignment film 103f: liquid crystal layer 103g: alignment film 103h: TFT circuit and transparent electrode film 103i: glass substrate 103j: polarizer (rear polarizer) 103k: backlight 104: RGB-IR camera (visible light/infrared camera; imaging unit) 105: IR light source (light-emitting unit) 106: black mask member 107: rearward light sensor 108: ambient light sensor 111: automatic anti-glare control unit 112: monitoring system control unit 113: camera-linked control unit 114: display control unit 116: rear camera 200: inner mirror 202: liquid crystal optical element 2021: camera region 2022: main region 203: liquid crystal display (liquid crystal display device) 2031: camera region (second camera region) 2032: main region (second main region) 300: inner mirror 306: black mask member 3061: first region 3062: second region 400: inner mirror 402: liquid crystal optical element 403: liquid crystal display (liquid crystal display device) 404: IR camera (infrared camera; imaging unit) 406: black mask member 500: inner mirror 506: black mask member 5061: third region 5062: fourth region X: viewing direction of the inner mirror

## Claims

1. An inner mirror comprising:
a liquid crystal optical element switchable between a reflective state and a transmissive state; and
an imaging unit disposed on the back side of the liquid crystal optical element and configured to receive light incident through the liquid crystal optical element and capture at least one of a visible light image and an infrared image.

2. The inner mirror according to claim 1,
wherein the imaging unit is a camera capable of capturing at least a visible light image among a visible light image and an infrared image, and
the liquid crystal optical element has a camera region corresponding to the imaging unit in the viewing direction of the inner mirror and a main region other than the camera region, and the camera region and the main region are configured such that switching between the reflective state and the transmissive state is independently controllable.

3. The inner mirror according to claim 2, wherein the inner mirror further comprises a liquid crystal display device disposed on the back side of the main region of the liquid crystal optical element and having an outer shape corresponding to the main region of the liquid crystal optical element in the viewing direction.

4. The inner mirror according to claim 3,
wherein the imaging unit is a visible light/infrared camera capable of capturing a visible light image and an infrared image,
the inner mirror further comprises a light-emitting unit disposed on the back side of the main region of the liquid crystal optical element and configured to emit infrared light, and
the liquid crystal display device has an outer shape corresponding to a region excluding a portion corresponding to the light-emitting unit from the main region of the liquid crystal optical element in the viewing direction.

5. The inner mirror according to claim 4, wherein the inner mirror further comprises a black mask member disposed between the main region of the liquid crystal optical element and the light-emitting unit, and having an outer shape overlapping the light-emitting unit and not overlapping the camera region of the liquid crystal optical element and the liquid crystal display device in the viewing direction.

6. The inner mirror according to claim 5, wherein the black mask member is formed of a visible-light-blocking and infrared-transmitting material.

7. The inner mirror according to claim 3,
wherein the imaging unit is a visible light/infrared camera capable of capturing a visible light image and an infrared image, and
the liquid crystal display device has a backlight, and at least some light sources of the backlight are light sources capable of emitting infrared light.

8. The inner mirror according to claim 2,
wherein the inner mirror further comprises a liquid crystal display device disposed on the back side of the liquid crystal optical element,
the liquid crystal display device having a second camera region corresponding to the camera region of the liquid crystal optical element in the viewing direction and a second main region other than the second camera region, a visible light transmittance of the second camera region being higher than a visible light transmittance of the second main region, and
the imaging unit receiving light incident through the camera region of the liquid crystal optical element and the second camera region of the liquid crystal display device.

9. The inner mirror according to claim 8, wherein the liquid crystal display device is configured such that a front polarizer, a color filter, a rear polarizer, and a backlight are not present in the second camera region.

10. The inner mirror according to claim 8, wherein the liquid crystal display device is configured such that only a glass substrate is present in the second camera region.

11. The inner mirror according to claim 8, wherein the liquid crystal display device is configured such that the second camera region is hollow.

12. The inner mirror according to claim 8, wherein the imaging unit is a visible light/infrared camera capable of capturing a visible light image and an infrared image.

13. The inner mirror according to claim 2, wherein the imaging unit is a visible light/infrared camera capable of capturing a visible light image and an infrared image, and
the inner mirror further comprises:
a light-emitting unit disposed on the back side of the main region of the liquid crystal optical element and configured to emit infrared light; and
a black mask member disposed between the main region of the liquid crystal optical element and the light-emitting unit and having an outer shape overlapping the light-emitting unit and not overlapping the camera region of the liquid crystal optical element in the viewing direction.

14. The inner mirror according to claim 13, wherein the black mask member has a first region corresponding to the light-emitting unit in the viewing direction and a second region other than the first region, and an infrared transmittance of the first region is higher than an infrared transmittance of the second region.

15. The inner mirror according to claim 14, wherein the first region of the black mask member is formed of a visible-light-blocking and infrared-transmitting material.

16. The inner mirror according to claim 1,
wherein the imaging unit is an infrared camera capable of capturing an infrared image, and
the inner mirror further comprises a liquid crystal display device disposed on the back side of the liquid crystal optical element and having an outer shape corresponding to a region excluding a region corresponding to the imaging unit in the liquid crystal optical element in the viewing direction of the inner mirror.

17. The inner mirror according to claim 16,
wherein the inner mirror further comprises a light-emitting unit disposed on the back side of the liquid crystal optical element and configured to emit infrared light, and
the liquid crystal display device has an outer shape corresponding to a region excluding regions corresponding to the imaging unit and the light-emitting unit in the liquid crystal optical element in the viewing direction.

18. The inner mirror according to claim 17, wherein the inner mirror further comprises a black mask member disposed between the liquid crystal optical element and the light-emitting unit and having an outer shape overlapping at least the light-emitting unit and not overlapping the liquid crystal display device in the viewing direction.

19. The inner mirror according to claim 18, wherein the black mask member is formed of a visible-light-blocking and infrared-transmitting material.

20. The inner mirror according to claim 16, wherein the liquid crystal display device has a backlight, and at least some light sources of the backlight are light sources capable of emitting infrared light.

21. The inner mirror according to claim 1, wherein the imaging unit is an infrared camera capable of capturing an infrared image, and
the inner mirror further comprises:
a light-emitting unit disposed on the back side of the liquid crystal optical element and configured to emit infrared light; and
a black mask member disposed between the liquid crystal optical element and the light-emitting unit.

22. The inner mirror according to claim 21, wherein the black mask member has a third region corresponding to at least the light-emitting unit in the viewing direction of the inner mirror and a fourth region other than the third region, and an infrared transmittance of the third region is higher than an infrared transmittance of the fourth region.

23. The inner mirror according to claim 22, wherein the third region of the black mask member is formed of a visible-light-blocking and infrared-transmitting material.
